# EUROPÄISCHE PATENTSCHRIFT

(11) **EP 0 838 443 B1**
(45) Veröffentlichungstag und Bekanntmachung des Hinweises auf die Patenterteilung: **13.06.2001**
(21) Anmeldenummer: 97116824.0
(22) Anmeldetag: 27.09.1997
(51) Int. Cl.: C04B 7/32

(54) **Verwertung von Al-haltigen Reststoffen**
Utilization of wastes containing alumina
Utilisation de déchets contenant de l'alumine

(30) Priorität: 26.10.1996 DE 19644654; 28.11.1996 DE 19649274; 10.09.1997 DE 19739617
(43) Veröffentlichungstag der Anmeldung: 29.04.1998
(73) Patentinhaber: ARDEX GMBH, D-58453 Witten-Annen (DE)
(72) Erfinder: Oberste-Padtberg, Rüdiger, Dr., 42111 Wuppertal (DE); Kuzel, Hans-Jürgen, Prof. Dr., 91080 Uttenreuth (DE)
(74) Vertreter: Cohausz & Florack Patentanwälte

(56) Entgegenhaltungen:
- DE-A- 2 326 800
- DE-A- 2 551 305
- GB-A- 1 535 052
- US-A- 3 819 393

## Beschreibung

Die Erfindung betrifft ein Verfahren zur Herstellung von Sulfoaluminatzementen, ausgehend von Aluminium enthaltenden Reststoffen.

Es ist bekannt, daß Sulfoaluminatzemente als hydraulisch aktiven Bestandteil eine Verbindung der Zusammensetzung 3CaO·3Al₂O₃·CaSO₄ enthalten, die nach dem Anmachen mit Wasser in Gegenwart von Calciumsulfat und anderen Calciumträgern zu Ettringit, 3CaO·Al₂O₃·3CaSO₄·2H₂O, reagiert. Da dieses Salz nur eine Dichte von 1,78 g/cm³ aufweist, führt seine Kristallisation in einer Zementpaste zu einer Vergrößerung ihres Volumens. Sulfoaluminatzemente werden daher bereits seit vielen Jahren meist in Abmischung mit Portlandzement und dem für die Ettringitbildung erforderlichen Anteil an Calciumsulfaten wie Gips, Calciumsulfathalbhydrat oder Anhydrit als Quellzement oder schwundkompensierte Zemente genutzt (Stark, J. & Chartschenko, I.: Entwicklung der Quellzemente für die Baupraxis; Intern. Symp. 75 Jahre Quellzement, Weimar 1995, 5-31).

Die GB 1 535 052 beschreibt ein ausgehärtetes Produkt, das aus einem sogenannten Monosulfat, Ettringit oder Mischungen derselben besteht, wobei zur Herstellung dieses Produkts keine Reststoffe eingesetzt wurden. Ein Calciumsulfoaluminatzement ist diesem Dokument ebenfalls nicht zu entnehmen. Die DE 2 326 800 betrifft einen schnell abbindenden Zement mit hoher Druckfestigkeit, der neben einer C3A3CS-Phase ungebundenes Calciumsulfat enthält, wobei auch hier zur Herstellung des Bindemittels keine Reststoffe verwendet werden. Die US 3 819 393 beschreibt ein Blähmittel für Sulfoaluminatzemente, wobei der Aluminiumträger Bauxit und der Calciumsulfat-Träger Anhydrit ist. Ferner wird ein Reststoff aus der Acetylen-Herstellung verarbeitet, der wahrscheinlich als Füllstoff dient.

Die herkömmliche großtechnische Herstellung von Sulfoaluminatzement erfolgt durch Sinterung homogenisierter feinteiliger natürlicher Rohstoffe, die Al₂O₃, CaO, SO₃ und Fe₂O₃ als Hauptkomponenten enthalten, in einem Drehrohrofen bei Temperaturen zwischen 1000 und 1350°C. Als Quelle für Al₂O₃ setzt man Bauxite, Tone mit hohem Al₂O₃-Anteil oder Kaolin ein. Calciumoxid wird der Rohmehlmischung als Kalkstein, SO₃ als Gips, Halbhydrat oder Anhydrit zugegeben. Aus der EP 0 476 031 B1 ist es beispielsweise bekannt, daß die erbrannten Sulfoaluminatklinker in Abhängigkeit von der Zusammensetzung der eingesetzten Rohmehle zwischen 20 und 80 Gew.% der Phase 3CaO·3Al₂O₃·CaSO₄ enthalten.

Der Erfindung liegt die Aufgabe zugrunde, zur Herstellung von Sulfoaluminatzementen geeignete Ersatzausgangsstoffe für die natürlichen Rohstoffe bereitzustellen und das Mischungsverhältnis im Rohmehl so einzustellen, daß ein möglichst hoher Anteil der hydraulisch aktiven Verbindungen im Klinker entsteht.

Gelöst wird diese Aufgabe durch die Verwendung von CaO-, Al₂O₃- und SO₃-haltigen Reststoffen, die bei der Reinigung von Rauchgasen, der Stahl- und Aluminiumherstellung sowie bei der Aufbereitung von Prozeß- und Abwässern als Produktionsrückstände entstehen, zur Herstellung von Sulfoaluminatzement mit der Hauptkomponente 3CaO·3Al₂O₃·CaSO₄, wobei die eingesetzten Reststoffe im Gemisch miteinander oder mit natürlichen Einsatzstoffen so vermischt werden, daß dessen rechnerisches CaO/Al₂O₃-Verhältnis zwischen 0,3 und 2,0, vorzugsweise zwischen 0,6 und 1,2 und sein SO₃-Äquivalenzgehalt zwischen 2,5 und 18 Gew.-%, vorzugsweise zwischen 5 und 9 Gew.-% bezogen auf glühverlustfreies Rohmehl, beträgt.

Die zur erfindungsgemäßen Herstellung von Sulfoaluminatzement geeignete Rohmehlzusammensetzung kann ein CaSO₄·2H₂O/Al₂O₃-Verhältnis von 0,3 bis 1,1 aufweisen. Zur Einstellung dieser Parameter kann ggfs. ein natürliches CaO-, SO₃- oder Al₂O₃-Träger dem Rohmehl zugegeben werden.

Die erfindungsgemäß zur Herstellung von Sulfoaluminat eingesetzten Reststoffe sind insbesondere die bei der Gewinnung von (Sekundär)Aluminium anfallende Salzschlacke und Aluminiumkrätze, die bei der Stahlbehandlung (z.B. Entschwefelung) anfallenden sekundärmetallurgischen Ca-Al-haltigen Schlacken, die bei der Sulfatfällung aus Abwässern anfallenden Ettringitschlämme und/oder die bei der Rauchgasentschwefelung anfallenden Gipse und calciumsulfithaltigen Reststoffe.

Die bei der Gewinnung von Sekundäraluminium anfallende Salzschlacke und Aluminiumkrätze, deren Deponierung kostspielig und umweltbelastend ist, enthält nach Aufbereitung durch Laugung noch sehr hohe Konzentrationen an Al₂O₃. So führt der als Oxiton bekannte, deponierbare Rückstand der Salzschlackeaufbereitung neben MgO (bis zu 10 Gew.%), CaO (bis 8 Gew.%) und SiO₂ etwa 50 bis 75 Gew.% Al₂O₃.

Bei der Stahlerzeugung werden in der Sekundär- und Pfannenmetallurgie Calcium/Aluminium enthaltende Schlacken u.a. zur Entschwefelung von Eisenschmelzen eingesetzt. Da das in einer solchen Schlacke vorhandene SiO₂, deren Entschwefelungskapazität vermindert und die Sauerstoffaktivität ansteigen läßt, wird in solchen Schlacken der Kieselsäureanteil minimiert. Solche Schlacken enthalten nach der Stahlbehandlung bis 65 Gew.% CaO, 20 bis 40 Gew.% Al₂O₃ und ein Schwefelgehalt von 1 bis 4 Gew.%, berechnet als SO₂. Der MgO-Anteil dieser Reststoffe liegt zwischen 2 und 10 Gew.% und darüber, typische SiO₂-Gehalte liegen unter 8 Gew.%. Auch diese Reststoffe werden zum größten Teil deponiert; eine direkte Verwertung dieses Materials in den meisten Baustoffen verbietet sich wegen deren mangelnder Raumbeständigkeit bei Wassereinwirkung.

Die Sulfat- und Sulfitfällung von Prozeß- und Abwässern erfolgt über den Einsatz von Calciumaluminaten oder anderen reaktiven Aluminium-Verbindungen und Calciumoxid oder Calciumhydroxid, wobei als Endprodukt Ettringit, ein wasserhaltiges Calcium/Aluminium-Sulfat entsteht. Dieser Reststoff kann nach entsprechenden Aufarbeitungsschritten als Füllstoff bei der Papier- und Kartonherstellung verwendet werden. Diese Verwertungsmöglichkeiten sind derzeit mengenmäßig begrenzt; ein Großteil dieses ettringithaltigen Reststoffs muß deponiert werden.

Für Rauchgasreinigungsgipse, die noch einen gewissen Anteil an organischen Verunreinigungen aufweisen, gibt es nur beschränkte Verwertungsmöglichkeiten; sie werden zum Teil deponiert. Sulfat/sulfithaltige Rauchgasreinigungsrückstände können nur in geringen Mengen minderwertigen Baustoffen beigemengt werden.

Werden anstelle von CaCO₃ oder CaSO₄·2H₂O andere Kalk-oder Sulfatträger oder Gemische daraus eingesetzt, so ist eine dem veränderten Molgewicht entsprechende Menge des jeweiligen Einsatzstoffes zu wählen. Durch das Brennen der homogenisierten Rohmehle wird ein Sulfoaluminatklinker mit 40 bis 80 Gew.% 3CaO·3Al₂O₃·CaSO₄ erhalten. Das Brennen kann bei einer Temperatur von 900 bis 1400°C, vorzugsweise 1100 bis 1300°C, erfolgen. Die Endtemperatur kann 5 bis 45 Minuten, vorzugsweise 10 bis 25 Minuten, gehalten werden. Bei zunehmendem CaCO₃-(oder CaO-)Gehalten im Rohmehl bildet sich bei Anwesenheit von Kieselsäure 2CaO·SiO₂ sowie die hochreaktive Nebenphase 12CaO·7Al₂O₃ oder bei Anwesenheit von Fluoriden, beispielsweise aus der Salzschlacke, 11CaO·7Al₂O₃·CaF₂. Bei der Bildung von Dicalciumsilicat kann aus den zum Einsatz kommenden Rohstoffen vorhandenen Magnesium freies MgO entstehen. In dem Brennprodukt vorhandenes freies MgO führt bei der Hydratation des daraus ermahlenen Sulfoaluminatzementes zu einer mangelnden Raumbeständigkeit.

Die Bildung von freiem MgO kann bei MgO-reichen Rohmehlen, vorzugsweise durch Einstellung des rechnerischen CaO/Al₂O₃-Verhältnisses auf < 1,0, unterdrückt werden. Unter diesen Bedingungen wird das im Rohmehl vorhandene SiO₂ in Gehlenit, 2CaO·SiO₂·Al₂O₃ und Magnesium in Spinell, MgO·Al₂O₃, eingebaut. Bei diesem CaO/Al₂O₃-Gehalten wird auch kein 12CaO·7Al₂O₃ mehr gebildet. Durch diese Einstellung der CaO- und Al₂O₃-Anteile des Sulfoaluminatzementrohmehls läßt sich selbst bei Anwesenheit größerer MgO-Anteile im Brenngut, die Bildung von freiem MgO vermeiden.

### Beispiele

### Beispiel 1

Gegeben sei eine aufbereitete Salzschlacke der folgenden chemischen Zusammensetzung (in Gew.%):

| | | | |
|---|---|---|---|
| Al₂O₃ | = 65,7 | Na₂O | = 0,8 |
| SiO₂ | = 7,9 | K₂O | = 0,4 |
| Fe₂O₃ | = 1,5 | SO₃ | = 0,5 |
| CaO | = 3,2 | F | = 1,2 |
| MgO | = 10,1 | P₂O₅ | = 0,1 |
| TiO₂ | = 0,9 | H₂O | = 7,3 |
| MnO | = 0,3 | | |

Die röntgenographische Phasenanalyse dieses Materials zeigt, daß die Elemente hautpsächlich in den kristallinen Phasen Konrund ∝-Al₂O₃, Bayerit Al(OH)₃, Spinell MgAl₂O₄ und ∝-Quarz SiO₂ gebunden sind. Untergeordnet treten Fluorit CaF₂, sowie elementares Si und Al auf. Unter der erfindungsgemäßen Verwendung dieser Salzschlacke läßt sich eine durch folgende Gewichtsverhältnisse charakterisierte Rohmischung aufbauen: Verhältnisse CaO/Al₂O₃ = 0,7 CaSO₄·2H₂O/Al₂O₃ = 0,56.

Das Rohmehl besteht damit aus
- 52,0: Gew.% aufbereiteter Salzschlacke
- 28,7: Gew.% CaCO₃
(als Kalksteinmehl mit 0,8 % SiO₂ und 0,3 % MgO)
- 19,3: Gew.% Gips CaSO₄·2H₂O (als REA-Gips).

Die aufgemahlene und homogenisierte Mischung wird im Verlauf von etwa 20 Minuten auf die Brenntemperatur von 1200°C bis 1300°C aufgeheizt. Dabei erfolgt rasche Oxidation der in der Salzschlacke vorhandenen geringen Anteile von Si und Al zu SiO₂ und Al₂O₃. Nach einer Verweilzeit von 30 bis 40 Minuten bei 1250°C sind die Reaktionen quantitativ abgelaufen, und der Sulfoaluminatklinker enthält etwa 65 Gew.% der aktiven Verbindung 3CaO·3Al₂O₃·CaSO₄. Als Nebenbestandteile treten bei den gegebenen Mischungsverhältnissen und chemischen Zusammensetzungen Spinell MgO·Al₂O₃ und Gehlenit 2CaO·Al₂O₃·SiO₂ auf. Unter diesen Bedingungen ist der SO₃-Verlust kleiner als 4g/kg Rohmehl. Das Verhältnis CaSO₄·2H₂O/Al₂O₃ war also nahezu optimal eingestellt. Bei Verwendung von Halbhydrat oder Anhydrit als Sulfat-Rohstoffe oder Kalksteinmehlen mit anderen chemischen Zusammensetzungen müssen die angegebenen Gewichtsverhältnisse entsprechend modifiziert werden. Es sei darauf hingewiesen, daß die Zusammensetzungen der Rohmehle nur näherungsweise aus den chemischen Analysendaten berechnet werden können, da die Phasenbreite der resultierenden Kristallarten im Klinker nicht genau bekannt sind. Es ist daher erforderlich, die Mischungen mit Sinterexperimenten für die jeweils einzusetzenden Einsatzstoffe zu optimieren.

### Beispiel 2

Eine unter dem Einsatz der beschriebenen aufbereiteten Salzschlacke mit höherem Anteil an Kalksteinmehl hergestellte Rohmischung sei durch die Gewichtsverhältnisse Verhältnisse CaO/Al₂O₃ = 1,08 CaSO₄·2H₂O/Al₂O₃ = 0,57 beschrieben.

Das Rohmehl enthält somit
- 42,0: Gew.% aufbereitete Salzschlacke
- 42,4: Gew.% CaCO₃
(als Kalksteinmehl mit 0,8 % SiO₂ und 0,3 % MgO)
- 15,6: Gew.% Gips CaSO₄·2H₂O (als REA-Gips).

Nach Oxidation der Gehalte an elementarem Aluminium und Silicium in der gut homogenisierten Mischung im Verlauf des Aufheizens erfolgt Einstellung der Gleichgewichte bereits bei Brenntemperaturen zwischen 1150°C und 1250°C und Verweilzeiten von 30 bis 40 Minuten, da die zur raschen Sinterung erforderliche Schmelzphase mit zunehmender Konzentration an CaO im Rohmehl bei geringeren Temperaturen gebildet wird. Der erhaltene Sulfoaluminatklinker führt zu etwa 70 % der Verbindung 3CaO·3Al₂O₃·CaSO₄. In diesem Fall ist SiO₂ nicht in Gehlenit 2CaO·Al₂O₃·SiO₂ gebunden, sondern in β-2CaO·SiO₂. Als Nebenphasen erscheinen Periklas MgO und die in Gegenwart von Wasser hochreaktive Phase 12CaO·7Al₂O₃ oder 11CaO·7Al₂O₃·CaF₂. Die Hydratationsgeschwindigkeit dieses Sulfoaluminatklinkers ist daher gegenüber dem in Beispiel 1 beschriebenen Produkt auch in Abmischungen mit Calciumsulfaten signifikant erhöht.

### Beispiel 3

Gegeben sei eine gemahlene Entschwefelungs-Stahlwerkschlacke mit folgender chemischer Zusammensetzung (in Gew.%) :

| | |
|---|---|
| CaO | = 53,8 |
| S (als SO₃) | = 2,47 |
| Al₂O₃ | = 30,41 |
| Fe₂O₃ | = 2,96 |
| SiO₂ | = 5,15 |
| MgO | = 4,46 |
| Cr₂O₃ | = 0,02 |

Mit Hilfe dieser Schlacke wird unter Verwendung von Rauchgasentschwefelungsgips und eisenhaltigem Bauxit (58,4 Gew.% Al₂O₃, 21,68 Gew.% Fe₂O₃, 3,48 Gew.% SiO₂ Rest: Glühverlust und Nebenbestandteile) folgendes Sulfoaluminatrohmehl hergestellt (Angaben in Gew.%):

| | |
|---|---|
| Bauxit: | 15,79 |
| Schlacke: | 74,74 |
| Gips: | 9,74 |

In diesem Rohmehl liegt das rechnerische CaO/Al₂O₃-Verhältnis bei 1,36. Mit Hilfe der Röntgenbeugungsuntersuchung konnte nachgewiesen werden, daß, nach 30 minütiger thermischer Behandlung dieses Rohmehls bei 1250°C 3CaO·3Al₂O₃·CaSO₄ als Hauptkomponente eben geringen Anteilen an 4CaO·Al₂O₃·Fe₂O₃ und MgO vorliegt.

### Beispiel 4

Ein Ettringitschlamm aus der Abwasserbehandlung wird bei 50°C getrocknet. Die Zusammensetzung seiner Hauptbestandteile ergab (in Gew.%) :

| | |
|---|---|
| CaO | = 26,9 |
| Al₂O₃ | = 8,4 |
| SO₃ | = 18,4 |
| Na₂O | = 1,2 |
| H₂O | = 45,1 |

Aus diesem Material, der aufbereiten Salzschlacke aus Beispiel 1 sowie Kalksteinmehl (Zusammensetzung: siehe ebenfalls Beispiel 1) wird ein Rohmehl mit der Zusammensetzung

| | |
|---|---|
| 50,0 Gew.% | getrockneter Reststoff-Ettringit, |
| 40,0 Gew.% | aufbereitete Salzschlacke |
| 10,0 Gew.% | Kalkstein |

hergestellt, homogenisiert und innerhalb von 20 Minuten auf eine Temperatur von 1300°C aufgeheizt. Bei dieser Temperatur wird das Mischgut für ca. 30 Minuten gehalten und anschließend auf Raumtemperatur abgekühlt. Das Brenngut enthält Ca-Sulfoaluminat als Hauptkomponente und Spinell sowie Gehlenit als Nebenphase.

### Beispiel 5

Ein Rohmehl, bestehend aus
- 43: Gew.% getrockneter Ettringitschlamm aus der Abwasserbehandlung (siehe Beispiel 4),
- 15: Gew.% Entschwefelungsschlacke (siehe Beispiel 3),
- 42: Gew.% aufbereitete Salzschlacke (siehe Beispiel 1)
wird hergestellt, homogenisiert und innerhalb von 20 Minuten auf eine Temperatur von 1300°C aufgeheizt. Bei dieser Temperatur wird das Mischgut für ca. 30 Minuten gehalten und anschließend auf Raumtemperatur abgekühlt. Das Brenngut enthält Ca-Sulfoaluminat als Hauptkomponente, Spinell sowie Gehlenit als Nebenphase und Spuren an MgO (Periklas).

## Patentansprüche

1. Verwendung von CaO-, Al₂O₃- und SO₃-haltigen Reststoffen, die bei der Reinigung von Rauchgasen, der Stahl- und Aluminiumherstellung sowie bei der Aufbereitung von Prozeß- und Abwässern als Produktionsrückstände entstehen, zur Herstellung von Sulfoaluminatzement mit der Hauptkomponente 3CaO·3Al₂O₃·CaSO₄, wobei die eingesetzten Reststoffe im Gemisch miteinander oder mit natürlichen Einsatzstoffen so vermischt werden, daß dessen rechnerisches CaO/Al₂O₃-Verhältnis zwischen 0,3 und 2,0, vorzugsweise zwischen 0,6 und 1,2 und sein SO₃-Äquivalenzgehalt zwischen 2,5 und 18 Gew.-%, vorzugsweise zwischen 5 und 9 Gew.-% bezogen auf glühverlustfreies Rohmehl, beträgt.

2. Verwendung nach Anspruch 1, **dadurch gekennzeichnet,** daß die Reststoffe einer Vorbehandlung wie Laugung der löslichen Bestandteile, Oxidation und/oder Vermahlung unterworfen werden.

3. Verwendung nach einem der Ansprüche 1 oder 2, **dadurch gekennzeichnet,** daß die eingesetzten Al₂O₃-haltigen Reststoffe CaF₂ enthalten.

4. Verwendung nach einem der Ansprüche 1 bis 3, wobei der Sulfoalmuniatzement einen MgO-Anteil von >2,0%, bezogen auf glühverlustfreies Rohmehl aufweist und wobei das rechnerische CaO/Al₂O₃-Verhältnis <1,0, vorzugsweise zwischen 0,5 und 0,9, beträgt.

5. Verwendung nach einem der Ansprüche 1 bis 4, wobei das Rohmehl auf 900 bis 1400 °C, vorzugsweise auf 1100 bis 1300 °C aufgeheizt wird und bei der Endtemperatur zwischen 5 und 45 Minuten, vorzugsweise zwischen 10 und 25 Minuten, gehalten wird.

## Claims

1. Use of CaO, Al₂O₃ and SO₃-containing recyclings that arise as production residues during flue gas purification, steel and aluminum production, as well as process and waste water treatment for the manufacture of sulfoaluminate cement with the primary component 3CaO·3Al₂O₃·CaSO₄, wherein the recyclings are mixed with each other or natural feed material in a mixture in such a way that its calculated CaO/Al₂O₃-ratio measures between 0.3 and 2.0, preferably between 0.6 and 1.2 % by weight and its SO₃ equivalence content measures between 2.5 and 18 % by weight preferably between 5 and 9 % by weight based on the raw meal free of ignition loss.

2. Use according to claim 1, characterized in that the recyclings are subjected to a preliminary treatment, such as soluble constituent leaching, oxidation and/or comminution.

3. Use according to one of claims 1 or 2, characterized in that the used Al₂O₃-containing recyclings contain CaF₂.

4. Use according to one of claims 1 to 3, wherein the sulfoaluminate cement has an MgO share of > 2.0 % based on the raw meal free of ignition loss, and wherein the calculated CaO/Al₂O₃-ratio measures < 1.0, preferably between 0.5 and 0.9.

5. Use according to one of claims 1 to 4, wherein the raw meal is heated to 900 to 1400 °C, preferably to 1100 to 1300 °C, and kept at the final temperature between 5 and 45 minutes, preferably between 10 and 25 minutes.

## Revendications

1. Utilisation de déchets contenant du CaO, Al₂O₃ et SO₃, qui se forment lors de la purification des gaz de fumée, de la préparation de l'acier et de l'aluminium, ainsi que lors du traitement des eaux de procédé et résiduaires comme résidus de procédé, pour la préparation de ciment sulfoaluminate avec le composant principal 3CaO·3Al₂O₃·CaSO₄, où les déchets mis en oeuvre en mélange les uns avec les autres ou avec des agents de cémentation naturels sont mélangés de sorte que son rapport mathématique CaO/Al₂O₃ se situe dans l'intervalle allant de 0,3 à 2,0, de préférence de 0,6 à 1,2 et sa teneur en équivalent SO₃ se situe dans l'intervalle allant de 2,5 à 18% en poids, de préférence de 5 à 9% en poids, sur base de la farine crue exempte de perte au feu.

2. Utilisation suivant la revendication 1, caractérisée en ce que les déchets sont soumis à un traitement préalable comme une lixiviation des constituants solubles, une oxydation et/ou un broyage.

3. Utilisation suivant l'une quelconque des revendications 1 ou 2, caractérisée en ce que les déchets contenant Al₂O₃ mis en oeuvre contiennent du CaF₂.

4. Utilisation suivant l'une quelconque des revendications 1 à 3, où le ciment sulfoaluminate présente une teneur en MgO > 2,0% sur base de la farine crue exempte de perte au feu et où le rapport mathématique CaO/Al₂O₃ est < 1,0, se situe de préférence dans l'intervalle allant de 0,5 à 0,9.

5. Utilisation suivant l'une quelconque des revendications 1 à 4, où la farine crue est chauffée de 900 à 1400°C, de préférence de 1100 à 1300°C et est maintenue à la température finale entre 5 et 45 minutes, de préférence entre 10 et 25 minutes.
